Europäisches Patentamt

European Patent Office

Office européen des brevets

(11) Numéro de publication: **0 374 012**
**A1**

## (12) DEMANDE DE BREVET EUROPEEN

(21) Numéro de dépôt: 89403385.1

(22) Date de dépôt: 06.12.89

(51) Int. Cl.5: **G07F 7/10, H04M 1/58, G06K 19/06**

(30) Priorité: 07.12.88 FR 8816056

(43) Date de publication de la demande: 20.06.90 Bulletin 90/25

(84) Etats contractants désignés: **DE ES GB IT**

(71) Demandeur: **ETAT FRANCAIS représenté par le Ministre des Postes, Télécommunications et de l'Espace (CENTRE NATIONAL D'ETUDES DES TELECOMMUNICATIONS) 38-40 rue du Général Leclerc F-92131 Issy-les-Moulineaux(FR)**

(72) Inventeur: **Genin, Jacques 12, rue Raffet F-75016 Paris(FR)**

(74) Mandataire: **Signore, Robert et al c/o BREVATOME 25, rue de Ponthieu F-75008 Paris(FR)**

(54) **Dispositif d'authentification pour serveur interactif.**

(57) Ce dispositif comprend un microprocesseur (22) apte à mettre en oeuvre un algorithme d'authentification, un émetteur de données (26) relié au microprocesseur (22), un récepteur de données (32) relié au microprocesseur et un transducteur électro-acoustique (40) ayant une entrée (41) relié à l'émetteur (26) et une sortie (44) reliée au récepteur (32).

Application à la transmission d'informations par téléphone.

EP 0 374 012 A1

FIG. 2

# DISPOSITIF D'AUTHENTIFICATION POUR SERVEUR INTERACTIF

La présente invention a pour objet un dispositif permettant l'authentification de transactions effectuées par des systèmes interactifs par l'intermédiaire du réseau téléphonique.

Nombre de dispositifs automatiques permettent la consultation de bases de données ou, plus généralement, l'obtention de services par le seul truchement d'un poste téléphonique. Celui-ci est muni d'un clavier d'appel à touches qui provoque l'émission de signaux multifréquence (connus sous le sigle DTMF). Dans ce genre de services, les informations dispensées à l'usager sont présentées sous forme de sons (tonalités, musiques ou parole enregistrée ou créée de diverses façons) et les commandes de l'usager sont composées au moyen des touches de l'appareil téléphonique, ordinairement destinées à composer les numéros appelés. Par leur nature même, les signaux engendrés par l'action sur ces touches sont véhiculés par les liaisons téléphoniques, de la même façon que les signaux de conversation.

La disponibilité très grande des postes téléphoniques à touches (tout particulièrement dans les cabines téléphoniques publiques) rend possible aujourd'hui la mise en oeuvre généralisée de cette technique.

Lorsque l'accès à de tels services est conditionné par une autorisation, un abonnement ou une redevance, il est d'usage de faire précéder toute session par la transmission d'un mot de passe confidentiel.

Or, la sécurité apportée par une telle procédure est illusoire. En effet, il a été démontré que les mots de passe choisis par les usagers, pour être plus faciles à retenir, sont d'une banalité telle qu'ils sont le plus souvent faciles à deviner. Par ailleurs, l'interception et l'enregistrement frauduleux d'une communication livrent instantanément le contenu du mot de passe.

Une excellente solution à ce problème est apportée par l'utilisation de la carte à microprocesseur. Mais sa mise en oeuvre nécessite l'adjonction au poste téléphonique d'un lecteur de carte à microprocesseur. Cette technique ne pourra pas être mise en oeuvre partout avant longtemps, en particulier dans les cabines téléphoniques publiques.

La présente invention a justement pour objet de remédier à cet inconvénient en proposant un dispositif électronique portable qui, associé à un complément de logiciel dans le système central du serveur et couplé par voie acoustique au poste téléphonique, permet d'apporter une sécurité d'authentification comparable à celle de la carte à microprocesseur.

De façon précise, la présente invention a pour objet un dispositif d'authentification pour serveur interactif, caractérisé par le fait qu'il comprend :
- un microprocesseur ayant une entrée et une sortie et étant apte à mettre en oeuvre un algorithme d'authentification,
- un émetteur de données ayant une entrée reliée à la sortie du microprocesseur, et une sortie,
- un récepteur de données ayant une entrée et une sortie reliée à l'entrée du microprocesseur,
- un transducteur électro-acoustique ayant une entrée reliée à la sortie de l'émetteur et une sortie reliée à l'entrée du récepteur.

De préférence, le microprocesseur remplit les fonctions d'acquisition d'un message numérique de chiffrement de ce message par un algorithme d'authentification et de réémission du message chiffré sur la sortie.

De préférence encore, le microprocesseur est apte à faire émettre le message chiffré de manière répétitive.

De préférence encore, l'émetteur et le récepteur fonctionnent sur des signaux multifréquence.

Selon un mode de réalisation avantageux, le dispositif comprend en outre un clavier permettant l'émission directe de signaux multifréquence vers le transducteur électro-acoustique.

De toute façon, les caractéristiques de l'invention apparaîtront mieux à la lumière de la description qui va suivre.

Cette description porte sur des exemples de réalisation donnés à titre explicatif et nullement limitatif. Elle se rapporte à des dessins annexés sur lesquels :
   - la figure 1 montre le schéma général d'un système interactif de transactions effectuées par le réseau téléphonique et utilisant le dispositif de l'invention,
   - la figure 2 montre la structure du dispositif de l'invention,
   - la figure 3 montre un double chronogramme illustrant l'enchaînement des messages et des réponses.

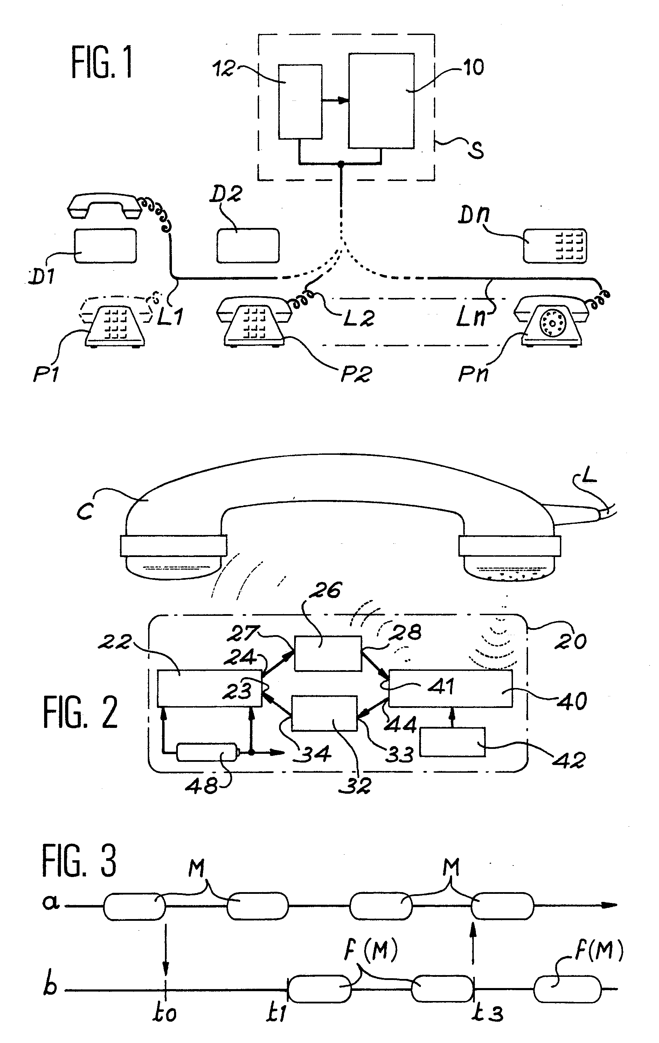

La figure 1 montre des postes téléphoniques à clavier $P_1$, $P_2$, ... et un poste à cadran Pn, des dispositifs D1, D2, ... conformes à l'invention et sans clavier et un dispositif Dn également conforme à l'invention mais avec clavier.

Tous les postes téléphoniques sont reliés à un central téléphonique non représenté, lequel permet d'appeler un serveur S. Celui-ci contient une source 10 d'informations (banques de données, machine parlante, etc...) et un moyen 12 apte à vérifier l'authenticité de l'appel et à commander, après vérification, le moyen 10.

Les dispositifs D1, D2, ... Dn se placent à proximité des combinés au début de la session. Leur structure est illustrée sur la figure 2.

Chaque dispositif comprend :
- un microprocesseur 22 ayant une entrée 23 et une sortie 24 et étant apte à mettre en oeuvre un algorithme d'authentification,
- un émetteur de données 26 ayant une entrée 27 reliée à la sortie 24 du microprocesseur 22, et une sortie 28,
- un récepteur de données 32 ayant une entrée 33 et une sortie 34 reliée à l'entrée 23 du microprocesseur 22,
- un transducteur électro-acoustique 40 ayant une entrée 41 reliée à la sortie 28 de l'émetteur 26 et une sortie 44 reliée à l'entrée 33 du récepteur 32.

Le transducteur acoustique 40 peut être un ensemble microphone-écouteur ou un transducteur électro-acoustique réversible.

Les éléments 26 et 32 ont la fonction de MODEM pour lesquels nombre de recommandations, spécifications et réalisations existent. Sans que cela puisse constituer une exclusive, il apparaît qu'un optimum économique peut être trouvé en utilisant un émetteur et un récepteur de signalisation multifréquence dite DTMF, d'usage courant dans les postes téléphoniques, les centraux téléphoniques et les serveurs dont il est question ici.

L'ensemble se complète par une alimentation électrique 48 par pile ou batterie d'accumulateurs, dans le cas où il est souhaité que le dispositif soit peu encombrant et facilement portable.

Le microprocesseur 22 peut ainsi recevoir des données du serveur (à travers la ligne téléphonique L, le haut-parleur du combiné C, le moyen de couplage acoustique 40 et le récepteur de données 32). Il transforme les données reçues par l'algorithme d'authentification et renvoie au serveur des données d'authentification (à travers l'émetteur de données 26, le moyen de couplage acoustique 40, le microphone du combiné C, la ligne téléphonique L).

Chez le serveur, des moyens 12 sont prévus pour dérouler des algorithmes de vérification, authentification, tirage au hasard, etc... Son logiciel doit être adapté à la réception de signaux multifréquence. Lorsque l'authenticité de l'appelant a été vérifiée, la session de transmission d'information peut commencer.

De façon plus précise, le fonctionnement de l'invention procède d'un échange de messaages entre le serveur (matériel centralisé, support du service) et le boîtier d'authentification. Un exemple non limitatif d'un tel fonctionnement est décrit ci-dessous.

Dès qu'il a été appelé de façon normale (appel d'un numéro téléphonique) ou, du moins, lorsque le service requiert l'authentification de l'usager, le serveur, après avoir éventuellement averti l'usager au moyen d'un message parlé automatique, émet à destination du dispositif d'authentification un message dont le contenu est le résultat d'un tirage aléatoire. Le serveur émet ce message périodiquement pendant une durée suffisante pour permettre à l'usager de mettre son dispositif d'authentification en fonctionnement et en position appropriée contre l'écouteur du combiné.

Lorsque ce message est reçu correctement par le dispositif, celui-ci élabore le message à répondre au moyen des algorithmes d'authentification et l'émet à son tour périodiquement au moyen de son transducteur électro-acoustique. Ce message est émis sur la ligne téléphonique en plaçant le boîtier contre le microphone du combiné téléphonique.

On observera que l'utilisation de la signalisation DTMF par le serveur et par le boîtier n'impose pas, en fait, l'utilisation d'un poste téléphonique à touches. Le boîtier peut même porter lui-même des touches permettant ainsi d'émettre des codes DTMF à partir d'un poste téléphonique sans clavier (poste à cadran, par exemple). C'est ce qui correspond au clavier 42 sur la figure 2 et à l'ensemble Pn Dn sur la figure 1.

On note également qu'il n'est pas nécessaire de placer successivement le boîtier contre l'écouteur puis contre le microphone du combiné téléphonique si les niveaux des signaux et les sensibilités des récepteurs sont suffisants, en particulier dans le cas de l'utilisation de postes téléphoniques à haut-parleur ou dits "mains-libres".

Le caractère périodique du message émis par le serveur, ménageant des silences entre chaque émission, permet au boîtier d'authentification de se synchroniser en émettant ses réponses pendant ces silences. La détection par le serveur en est ainsi rendue plus aisée.

Les spécifications usuelles des signaux DTMF permettent de transmettre quinze codes portant chacun 4 bits par seconde. La longueur à donner aux messages à transmettre dépend des algorithmes d'authentification utilisés et du niveau de sécurité recherché. Les algorithmes sont du type général de ceux utilisés en chiffrement (à clef publique ou à clef secrète) : l'interception et l'analyse de tous les messages transmis par le passé ne permettent pas de découvrir la fonction mise en oeuvre ni de prévoir les messages futurs ou les réponses à leur donner. Une durée des messages de 1 seconde donnera satisfaction dans la majorité des situations pratiques.

Les chronogrammes de la figure 3 montrent, sur la ligne a, l'émission répétitive de messages M par le serveur et, sur la ligne b, l'émission de réponses f(M) par le dispositif de l'invention.

La réponse f(M) peut être une fonction du message M définie par l'algorithme d'authentification.

Sur la ligne b, l'instant to marque le début de l'acquisition du message par le dispositif de l'invention et l'intervalle t0 t1 la phase d'élaboration de la réponse par l'algorithme d'authentification. A partir de t1 le boîtier émet périodiquement sa réponse. Après avoir reçu une ou plusieurs réponses (instant t3) le serveur a acquis la réponse et authentifié l'usager.

**Revendications**

1. Dispositif d'authentification pour serveur interactif, caractérisé par le fait qu'il comprend :
- un microprocesseur (22) ayant une entrée (23) et une sortie (24) et étant apte à mettre en oeuvre un algorithme d'authentification,
- un émetteur de données (26) ayant une entrée (27) reliée à la sortie (24) du microprocesseur (22), et une sortie (28),
- un récepteur de données (32) ayant une entrée (33) et une sortie (34) reliée à l'entrée (23) du microprocesseur (22),
- un transducteur électro-acoustique (40) ayant une entrée (41) reliée à la sortie (28) de l'émetteur (26) et une sortie (44) reliée à l'entrée (33) du récepteur (32).

2. Dispositif selon la revendication 1, caractérisé par le fait que le microprocesseur (22) remplit les fonctions d'acquisition d'un message numérique appliqué, de chiffrement de ce message par un algorithme d'authentification et de réémission du message chiffré sur la sortie (24).

3. Dispositif selon la revendication 2, caractérisé par le fait que le microprocesseur (22) est apte à faire émettre le message chiffré de manière répétitive.

4. Dispositif selon la revendication 3, caractérisé par le fait que l'émetteur (26) émet ses réponses entre les messages reçus par le récepteur (32).

5. Dispositif selon la revendication 1, caractérisé par le fait que l'émetteur (26) et le récepteur (32) fonctionnent sur des signaux multifréquence.

6. Dispositif selon la revendication 5, caractérisé par le fait qu'il comprend en outre un clavier (42) permettant l'émission directe de signaux multifréquence vers le transducteur électro-acoustique (40).

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3976840 (CLEVELAND ET.AL.) <br> * le document en entier * <br> --- | 1, 2, 4-6 | G07F7/10 <br> H04M1/58 <br> G06K19/06 |
| Y | US-A-4601011 (GRYNBERG) <br> * abrégé; revendications 1-10; figures 1-5 * <br> * colonne 2, ligne 16 - colonne 3, ligne 42 * <br> * colonne 4, ligne 15 - colonne 5, ligne 60 * <br> --- | 1, 2, 4-6 | |
| A | US-A-3652795 (WOLF ET.AL.) <br> * abrégé; revendications 1-7; figures 1-5 * <br> --- | 1, 5, 6 | |
| A | WO-A-8204169 (SCHAUSE S.A.) <br> * abrégé; revendications 1-4; figures 1-3 * <br> * page 1, ligne 1 - page 4, ligne 19 * <br> --- | 1-6 | |
| A | IBM TECHNICAL DISCLOSURE BULLETIN. <br> vol. 10, no. 3, août 1967, NEW YORK US <br> pages 188 - 189; M.F. DAVIS Jr. et.al.: <br> "Wallet terminal keyboard with acoustic coupler" <br> * le document en entier * <br> --- | 1 | |
| A | IBM TECHNICAL DISCLOSURE BULLETIN. <br> vol. 26, no. 8, janvier 1984, NEW YORK US <br> pages 4096 - 4097; J.B. LANDROCK et.al.: <br> "Enciphering adapter" <br> * le document en entier * <br> --- | 1 | DOMAINES TECHNIQUES RECHERCHES (Int. Cl.5) <br><br> G07F <br> H04M <br> G06K <br> G06F |
| A | WO-A-8800743 (BULL-CP8) <br> * abrégé; revendications 1-8 * <br> --- | 1 | |
| P,X | FR-A-2621199 (A.E.T.A.) <br> * abrégé; revendications 1-7 * <br> * page 2, ligne 4 - page 5, ligne 11 * <br> --- | 1 | |
| A | EP-A-0180684 (COSCOM DATENTECHNIK) <br> --- | | |
| A | US-A-4442318 (DESROCHERS) <br> ----- | | |

Le présent rapport a été établi pour toutes les revendications

| Lieu de la recherche | Date d'achèvement de la recherche | Examinateur |
|---|---|---|
| LA HAYE | 15 MARS 1990 | GUIVOL O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)